(19) **Europäisches Patentamt European Patent Office Office européen des brevets**

(11) **EP 3 477 069 B1**

(12) **FASCICULE DE BREVET EUROPEEN**

(45) Date de publication et mention de la délivrance du brevet:
**16.06.2021 Bulletin 2021/24**

(51) Int Cl.:
*F01N 3/20* *(2006.01)*     *F01N 3/10* *(2006.01)*
*F01N 3/28* *(2006.01)*

(21) Numéro de dépôt: **18199140.7**

(22) Date de dépôt: **08.10.2018**

(54) **DISPOSITIF POUR LE MÉLANGE DE FLUX DANS UN TUBE D'ÉCHAPPEMENT DE FLUX**

**VORRICHTUNG ZUM MISCHEN DES GASFLUSSES IN EINEM ROHR ZUR ABLEITUNG DES ABGASFLUSSES**

**DEVICE FOR MIXING FLOW IN AN EXHAUST FLOW PIPE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2017 FR 1760077**

(43) Date de publication de la demande:
**01.05.2019 Bulletin 2019/18**

(73) Titulaire: **IFP Energies nouvelles**
**92852 Rueil-Malmaison Cedex (FR)**

(72) Inventeurs:
• **RAUX, Stéphane**
**69530 Oliénas (FR)**
• **LECOMPTE, Matthieu**
**69440 Taluyers (FR)**
• **LAGET, Olivier**
**92500 Rueil-Malmaison (FR)**
• **SCHIFFMANN, Philpp**
**92500 Rueil-Malmaison (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 2 388 451      WO-A1-2007/110575
DE-A1- 10 060 808      US-A1- 2009 229 254
US-A1- 2010 139 258

**Description**

La présente invention se situe dans le domaine de l'automobile et a trait plus particulièrement aux systèmes de traitement des gaz positionnés dans un tube d'échappement des gaz d'un moteur thermique.

Les oxydes d'azotes (ou NOx) sont des sous-produits de la combustion qui sont formés dans des conditions de températures élevées, et préférentiellement dans des conditions de fortes teneurs en oxygène. Les oxydes d'azotes, qui sont composés d'oxyde d'azote (NO) et de dioxyde d'azote ($NO_2$), ont un impact néfaste direct sur la santé et indirect par formation secondaire d'ozone troposphérique.

Le catalyseur de réduction sélective (ou le SCR pour Selective Catalytic Réduction) est l'un des moyens les plus adaptés pour réduire ces émissions. Le principe de la SCR consiste à réduire de manière sélective les oxydes d'azotes (NOx) par une espèce présente issue de la combustion ou injectée à l'échappement, sur un catalyseur dédié.

La technique la plus répandue, ou en voie de l'être, est la SCR par l'ammoniac. Cet ammoniac est classiquement obtenu de façon indirecte par la décomposition d'un précurseur injecté sous forme liquide, généralement de l'urée en solution aqueuse à 32,5%m nommée AdBlue ® ou DEF.

L'Adblue ® est classiquement injecté à l'échappement et l'eau contenue est rapidement évaporée, puis chaque molécule d'urée se décompose suivant deux étapes en deux molécules d'ammoniac. A des températures inférieures à environ 180°C, il est difficile de bien vaporiser l'AdBlue ® injecté et de le décomposer en ammoniac et acide isocyanique. Or les catalyseurs de SCR peuvent être actifs à des températures inférieures, de l'ordre de 120 à 150 °C.

Injecter non pas de l'urée mais de l'ammoniac gazeux revêt alors un intérêt majeur. Toutefois, assurer une bonne distribution d'ammoniac en entrée du catalyseur SCR s'avère difficile, particulièrement avec des architectures de ligne compactes proposant peu d'espace entre un catalyseur d'oxydation diesel (ou DOC pour Diesel Oxydation Catalyst pouvant être traduit par catalyseur d'oxydation diesel) et le SCR (ou SCRF). Une répartition hétérogène de concentration en ammoniac en entrée du SCRF induit une perte d'efficacité de réduction des oxydes d'azotes (NOx) dans les zones à concentration insuffisante et une émission indésirable d'ammoniac dans les zones de trop forte concentration. Pour optimiser l'efficacité du système, un mélangeur dédié est nécessaire pour homogénéiser la distribution d'ammoniac dans l'échappement.

A cet effet le document WO 2011086259 propose un dispositif de mélange entre un flux gazeux principal et un flux gazeux auxiliaire qui comprend un moyen de mise en rotation de gaz pour obtenir un mélange homogène entre le flux principal et le flux auxiliaire et pour disperser le mélange obtenu en sortie du dispositif. Ce dispositif comprend un moyen d'accélération du flux principal sous forme d'une tuyère concentrique. Cependant un des inconvénients de tels dispositifs est d'avoir des pertes de charge en sortie de la tuyère mais également un mélange des gaz qui n'est pas optimal.

Une autre forme de dispositif est présenté dans le document US2009266064 dans lequel le mélange des gaz est effectué par un dispositif comprenant des pales. Les documents DE10060808A1, WO2007110575A1, EP2388451A1, US2010139258A1 et US2009229254A1 décrivent d'autres solutions alternatives. De tels dispositifs ne permettent pas d'assurer une qualité de mélange optimale.

Le but de l'invention est d'améliorer la qualité de mélange par rapport aux modèles de mélangeurs à lame et de limiter les pertes de charge par rapport aux modèles de mélangeurs convergents en diffusant efficacement l'ammoniac centralement injecté sur toute une section transversale. Ainsi le mélange entre l'ammoniac gazeux (NH3) et les gaz d'échappement avant le catalyseur de réduction sélective (SCR) est amélioré et, de ce fait, l'efficacité de conversion des oxydes d'azotes (NOx) en gaz non toxiques dans le SCR est augmentée.

Ainsi, pour atteindre au moins les objectifs susvisés, parmi d'autres, la présente invention propose, selon un premier aspect, un circuit d'échappement de gaz d'un moteur thermique comprenant un catalyseur de réduction sélective et un catalyseur d'oxydation diesel positionné en amont du catalyseur de réduction sélective, comme revendiqué en revendication 1, ledit circuit comprenant un dispositif pour le mélange d'au moins un flux principal avec au moins un flux auxiliaire dans un tube d'échappement de gaz d'un moteur thermique, ledit dispositif est positionné dans un tube entre le catalyseur de réduction sélective et le catalyseur d'oxydation diesel, et l'invention se caractérise en ce que le dispositif est composé d'un disque central plein de rayon R1 et d'un anneau périphérique pourvu d'une partie évidée au centre de rayon extérieur R2 supérieur au rayon R1, le disque central et l'anneau périphérique sont centrés l'un par rapport à l'autre et distants l'un de l'autre d'une longueur, l'anneau périphérique est directement en contact avec le tube d'échappement et ledit dispositif comprend, entre le disque central et l'anneau périphérique, un espace pour le passage des flux, ledit dispositif étant prévu pour être positionné dans le tube d'échappement.

L'effet d'un tel dispositif est d'assurer un mélange optimal entre les flux incidents sur le dispositif.

Selon un premier mode de réalisation, le disque central a une forme arrondie et la partie périphérique du disque central est dirigée vers l'anneau périphérique. De cette manière le dispositif est dans une configuration de type siphon qui a pour effet de mélanger les flux grâce, entre autre, à la variation des surfaces d'entrée et de sortie que va subir les flux (et donc de pression) combinée à un changement de direction des flux. La partie périphérique arrondie du disque central permet de rediriger les flux vers les bords du disque central, là où se situe l'espace pour le passage des flux dans le tube.

Selon une caractéristique, le disque central comprend une partie plane au centre. Cette partie plane a pour rôle de bloquer efficacement au milieu du tube les flux lors de leur écoulement.

Selon une caractéristique, l'anneau périphérique est positionné en amont du disque central dans le sens de circulation des flux. De cette manière la surface d'entrée, qui correspond à la surface évidée de l'anneau périphérique, est plus grande que la surface de sortie qui correspond à la surface entre la partie périphérique arrondie du disque central et le tube dans lequel est intégré le dispositif. Cette configuration permet d'avoir un effet siphon qui est efficace.

Selon un deuxième mode de réalisation, le disque central a une forme arrondie et la partie périphérique du disque central est dirigée à l'opposé de l'anneau périphérique.

Selon une caractéristique, l'anneau périphérique a une forme arrondie et la partie périphérique de l'anneau périphérique chevauche en partie le disque central.

Selon une caractéristique, l'anneau périphérique est positionné en aval du disque central dans le sens de circulation des flux. De cette manière la surface d'entrée, qui correspond à la surface entre la partie périphérique arrondie du disque central et le tube dans lequel est intégré le dispositif, est plus grande que la surface de sortie qui correspond à la surface évidée de l'anneau périphérique. Cette configuration permet d'avoir un effet siphon inverse qui est efficace pour le mélange des flux.

Selon un troisième mode de réalisation, le dispositif comprend un second anneau périphérique de rayon extérieur R3 supérieur au rayon extérieur R2 du premier anneau périphérique. De cette manière, le dispositif est dans une configuration de type diffuseur.

Selon une caractéristique, le second anneau périphérique est positionné en amont de l'anneau périphérique dans le sens de circulation des flux.

Selon une caractéristique, le flux principal peut être un flux gazeux. Dans un exemple qui ne fait pas partie de la présente invention, le flux principal peut être liquide.

Selon une caractéristique, le flux auxiliaire peut être un flux gazeux ou liquide.

Un exemple qui ne fait pas partie de la présente invention concerne un circuit d'échappement de gaz d'un moteur thermique comprenant un catalyseur de réduction sélective (SCR) et un catalyseur d'oxydation diesel (DOC) positionné en amont du catalyseur de réduction sélective (SCR) et comprenant un dispositif de mélange tel que décrit précédemment positionné dans le tube entre le catalyseur de réduction sélective (SCR) et le catalyseur d'oxydation diesel (DOC).

Selon une caractéristique, le circuit d'échappement comprend un dispositif d'injection d'au moins un flux auxiliaire dans au moins un flux principal, ledit dispositif d'injection est positionné en amont du catalyseur de réduction sélective (SCR) et du dispositif de mélange.

D'autres caractéristiques et avantages du dispositif selon l'invention, apparaîtront à la lecture de la description ci-après d'un exemple non limitatif de réalisation, en se référant aux figures annexées et décrites ci-après.

## Présentation succincte des figures

Les figures 1a et 1b illustrent un dispositif de mélange selon un premier mode de réalisation ;
Les figures 2a et 2b illustrent un dispositif de mélange selon un deuxième mode de réalisation ;
Les figures 3a à 3c illustrent un dispositif de mélange selon un troisième mode de réalisation ;
La figure 4 illustre une première réalisation d'une colonne d'échappement de gaz pour un moteur thermique ;
La figure 5 illustre une deuxième réalisation d'une colonne d'échappement de gaz pour un moteur thermique.

## Description détaillée de l'invention

Le but de l'invention est de développer une géométrie d'un mélangeur statique qui améliore un mélange gaz / gaz ou gaz / liquide entre deux constituants ou plus (par exemple mélange entre ammoniac gazeux (NH3) ou solution d'urée atomisée et gaz d'échappement) augmentant ainsi l'efficacité de conversion d'oxydes d'azotes (NOx) en gaz non toxiques dans un catalyseur. Le mélange de l'ammoniac gazeux est facilité par la conception des mélangeurs suggérés dans la description qui suit et qui propagent efficacement l'ammoniac injecté centralement sur toute la section transversale.

Les dispositifs mélangeurs (1, 10, 20) se composent au moins de deux parties principales: un disque central (6) et un anneau périphérique (7) placés à une distance l'un de l'autre de manière à assurer un mélange optimal. Dans le cadre de l'invention plusieurs architectures sont proposées.

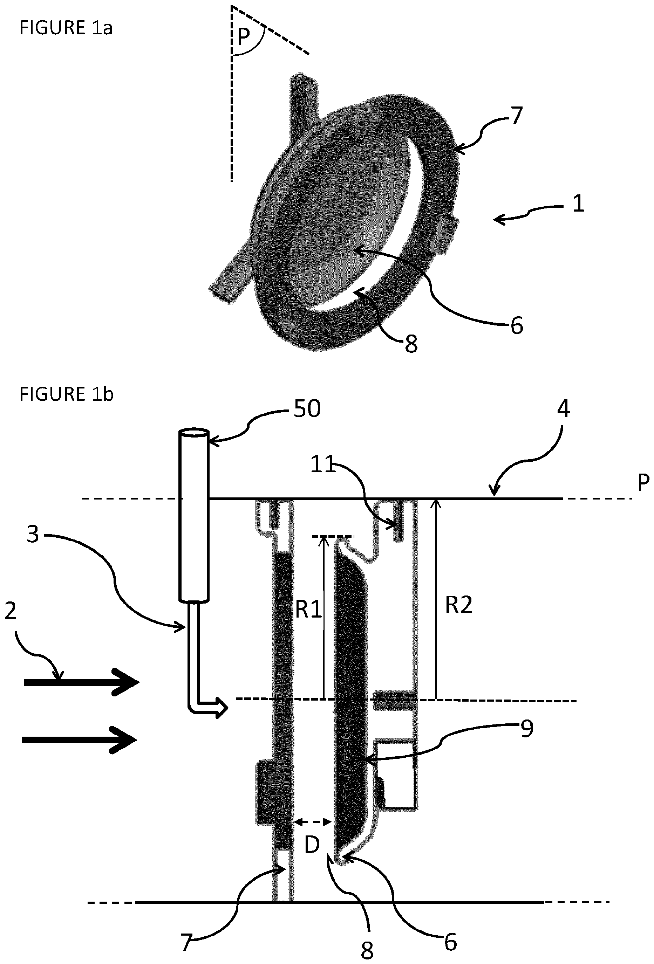

Les figures 1a et 1b représentent un premier mode de réalisation d'un dispositif (1) pour le mélange d'un flux principal (2) avec un flux secondaire (3). La figure 1a est une vue en perspective du dispositif (1) qui est composé d'un disque central (6) plein et d'un anneau périphérique (7). La figure 1b est une vue en coupe dans le plan P du dispositif (1) de la figure 1a. Le disque central (6) est un disque circulaire de rayon R1. L'anneau périphérique (7) est également circulaire et il comprend un rayon extérieur R2. L'anneau périphérique (7) est évidé au centre de manière à laisser passer les flux. Dans le cadre de l'invention, le rayon R2 est supérieur au rayon R1. On entend par rayon extérieur le rayon qui est mesuré à la distance la plus éloignée du centre de l'anneau périphérique (7).

Comme visible sur les figures 1a et 1b, le disque central (6) et l'anneau périphérique (7) sont centrés l'un par rapport à l'autre et distants d'une longueur D de manière à former un espace (8) pour le passage des flux (2, 3). La distance D peut être comprise entre 5 et 25 mm et est préférentiellement égale à 16mm. Le disque central (6) a une forme arrondie et il comprend au centre une partie plane (9). Dans d'autres variantes de réalisation, le disque central (6) peut avoir une forme plane ou pyramidale sans que cela ne change l'effet technique du dispositif (1) pour le mélange. L'anneau périphérique (7) est plan. Dans des variantes de réalisation celui-ci peut être courbé et comporter un rayon de courbure.

Dans ce premier mode de réalisation, le dispositif (1) est dans une configuration de type siphon. Le dispositif (1) est prévu pour être positionné dans un tube d'échappement (4) avec le disque central (6) qui est positionné en aval de l'anneau périphérique (7) lorsque que l'on considère le sens de circulation des flux (2, 3). En outre la partie périphérique du disque central (6) (liée à la forme arrondie) est dirigée vers l'anneau périphérique (7). De cette manière la partie périphérique du disque central (6) va avoir une fonction de rétention des flux ce qui augmente l'efficacité du mélange. Au cours du fonctionnement, les flux vont d'abord traverser la partie évidée de l'anneau périphérique (7) pour être concentrés vers la partie plane (9) du disque central (6) qui va les bloquer. Puis les flux vont être dirigés par la partie périphérique courbée du disque central (6) vers l'espace (8) dans lequel les flux vont pouvoir traverser le dispositif (1). Comme le rayon R1 du disque central (6) est inférieur au rayon du tube (4), les flux vont passer par l'espace entre le disque central (6) et le tube (4). Une autre variante de ce dispositif (1) est d'avoir le disque central (6) qui est positionné en amont de l'anneau périphérique (7). Dans ce cas, les flux vont d'abord rencontrer la partie plane (9) du disque central (6) avant de se propager par l'espace (8) puis à travers la partie évidée de l'anneau périphérique (7). Quel que soit le cas de figure, un dispositif d'injection (50) permet d'injecter le flux auxiliaire (3) dans le flux principal (2) qui circule dans le tube d'échappement (4). Le dispositif d'injection (50) est positionné avant le dispositif (1) pour le mélange. L'anneau périphérique (7) est directement en contact avec le tube d'échappement (4) qui dans ce cas a un rayon sensiblement égal à R2. Le disque central (6) est quant à lui fixé au tube d'échappement (4) par l'intermédiaire d'une pièce de maintien (11). Ce dispositif de maintien (11) est configuré pour faire le moins possible obstacle au passage des flux. Dans une variante du dispositif (1), le disque central (6) est relié directement à l'anneau périphérique (7) par tous moyens connus.

De par cette conception du siphon, le dispositif (1) a une surface d'entrée plus grande ou égale à la surface de sortie ce qui restreint l'écoulement lors du passage de la deuxième surface et provoque un effet siphon qui permet un mélange optimal. D'une manière générale, le flux principal (2) peut être un flux gazeux ou liquide comme des gaz d'échappement du moteur thermique (5) et le flux auxiliaire (3) peut être un flux gazeux ou liquide comme de l'ammoniac gazeux.

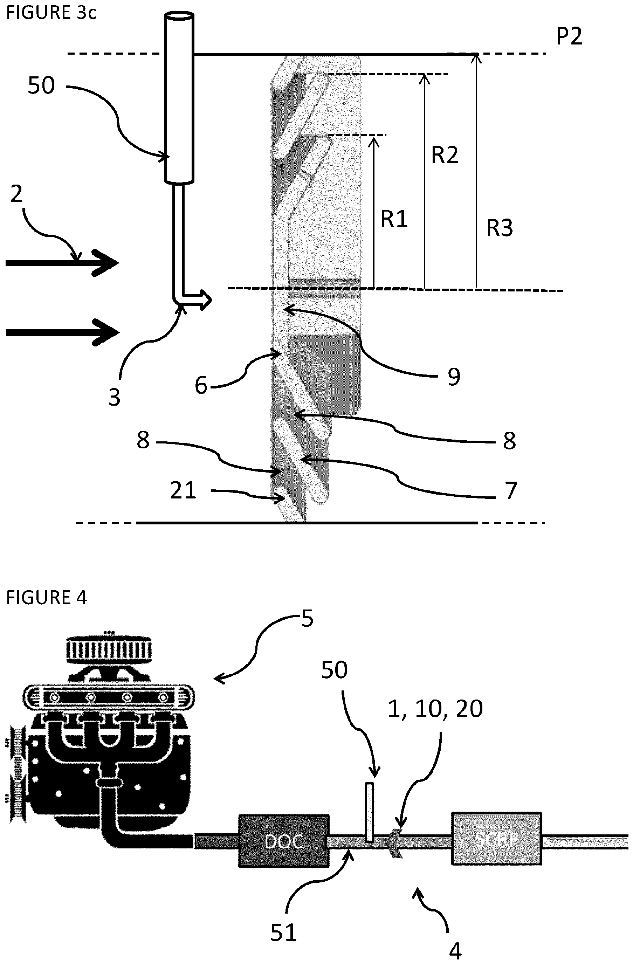

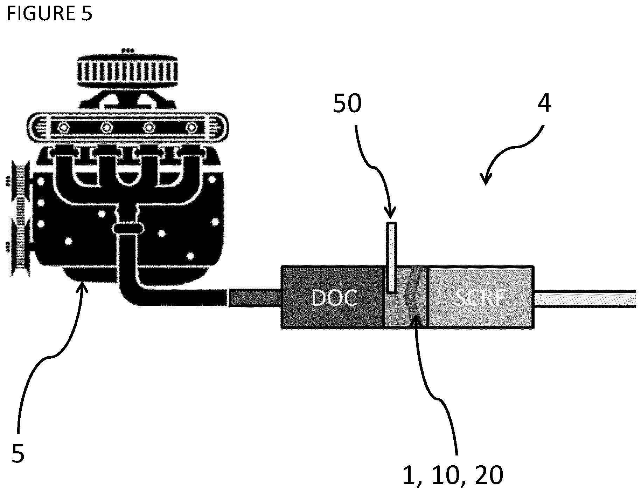

Comme visible aux figures 4 et 5, le mélangeur siphon est destiné à être utilisé dans les systèmes d'échappement automobiles en amont d'un catalyseur de réduction sélective (SCR) pour faciliter le mélange entre les flux.

Dans la figure 4 qui représente une première réalisation d'un circuit d'échappement de gaz pour un moteur thermique (5), le dispositif (1) selon le premier mode de réalisation est intégré dans un tube (51) qui relie le catalyseur de réduction sélective (SCR ou SCRF) à un catalyseur d'oxydation diesel (DOC) placé avant le catalyseur de réduction sélective (SCR).

La figure 5 représente une deuxième réalisation d'un circuit d'échappement de gaz pour un moteur thermique (5) qui est en configuration de couplage où le DOC et le système SCR sont dans un tube compact avec le même diamètre directement en aval du moteur thermique (5).

On peut quantifier par simulation les valeurs de la chute de pression ou de charge sur le mélangeur et la distribution d'ammoniac sur une section transversale du flexible. Cette section transversale étant prise à moins de 100mm de la sortie du dispositif pour le mélange. Ces valeurs peuvent être comparées à des valeurs expérimentales. L'homogénéité du mélange de gaz d'échappement d'ammoniac est quantifiée à l'aide d'un indice d'uniformité (UI) tel que défini ci-dessous :

$$UI = 1 - \frac{1}{2} \frac{\sum_{i=1}^{n} \left( A_i \sqrt{\left( y_{NH_3, i} - \overline{y_{NH_3}} \right)^2} \right)}{A \cdot \overline{y_{NH_3}}}$$

$$\overline{y_{NH_3}} = \frac{\sum_{i=1}^{n} A_i \cdot y_{NH_3, i}}{A}$$

Par rapport à un système d'échappement sans mélangeur ou un simple mélangeur à lames, le dispositif mélangeur à siphon améliore l'UI de -1,382 à 0,82 et de 0,544 à 0,82 respectivement.

Cela montre que le mélangeur siphon est un dispositif de mélange hautement efficace capable de mélanger de l'ammoniac gazeux avec les gaz d'échappement à moins de 100 mm de la surface de sortie du mélangeur et ceci avec un indice d'uniformité UI> 0,80.

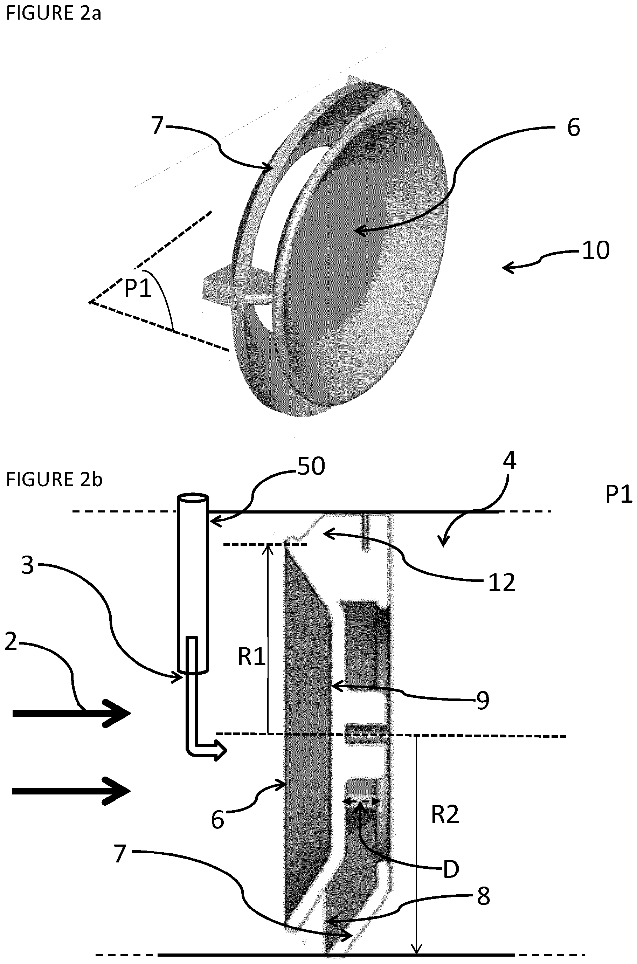

Les figures 2a et 2b représentent un deuxième mode de réalisation d'un dispositif (10) pour le mélange d'un flux principal (2) avec un flux secondaire (3). La figure 2a est une vue en perspective du dispositif (10) qui est composé d'un disque central (6) plein et d'un anneau périphérique (7) courbé. La figure 2b est une vue en coupe dans le plan P1 du dispositif (10) de la figure 2a. Le disque central (6) est un disque circulaire de rayon R1. L'anneau périphérique (7) est également circulaire et il est comprend un rayon extérieur R2. Dans le cadre de l'invention le rayon R2 est supérieur au rayon R1.

Comme visible sur les figures 2a et 2b, le disque central (6) et l'anneau périphérique (7) sont centrés et distants d'une longueur D de manière à former un espace (8) pour le passage des flux (2, 3). La distance D peut être comprise entre 10 et 20 mm et est préférentiellement égale à 12.5mm. Le disque central (6) a une forme arrondie et il comprend au centre une partie plane (9). Dans d'autres variantes de réalisation, le disque central (6) peut avoir une forme plane, pyramidale, conique sans que cela change l'effet technique du dispositif (10) pour le mélange. En outre la partie périphérique du disque central (6) (liée à la forme arrondie) est dirigée à l'opposé de l'anneau périphérique (7). L'anneau périphérique (7) est quant à lui courbé, c'est-à-dire que au niveau de ses extrémités celui-ci est replié et la partie courbée est dirigée vers le disque central (6) de manière à ce qu'il y ait un chevauchement de la partie courbée de l'anneau périphérique (7) sur la partie courbée du disque central (6).

Dans ce deuxième mode de réalisation, le dispositif (10) est dans une configuration de type siphon inverse. Le dispositif (10) est prévu pour être positionné dans un tube d'échappement (4) de telle manière que le disque central (6) est positionné en amont de l'anneau périphérique (7) lorsque que l'on considère le sens de circulation des flux (2, 3). Dans une variante de réalisation, le disque central (6) peut être positionné en aval de l'anneau périphérique (7). Un dispositif d'injection (50) permet d'injecter le flux auxiliaire (3) dans le flux principal (2) qui circule dans le tube d'échappement (4). Le dispositif d'injection (50) est positionné avant le dispositif (10) pour le mélange. De cette manière les flux (2, 3) rencontrent le disque central (6) en premier. L'anneau périphérique (7) est directement en contact avec le tube d'échappement (4) qui dans ce cas a un rayon sensiblement égal à R2. Le disque central (6) est fixé à l'anneau périphérique (7) par l'intermédiaire d'une pièce de maintien (12).

De par cette conception du siphon inverse, le dispositif (10) a une aire de surface d'entrée (le rayon R1 du disque central (6) est inférieur au rayon du tube (4), et les flux vont passer par l'espace entre le disque central (6) et le tube (4) qui représente l'aire de la surface d'entrée) qui est plus petite ou égale à la surface de la zone de sortie (qui correspond à l'aire de la partie évidée de l'anneau), limitant l'écoulement sur la première surface et libérant ensuite les gaz dans une sortie de surface plus grande ce qui a pour effet de produire un effet de siphon inversé qui permet un mélange optimal des flux. D'une manière générale, le flux principal (2) peut être un flux gazeux ou liquide comme des gaz d'échappement du moteur thermique (5) et le flux auxiliaire (3) peut être un flux gazeux ou liquide comme de l'ammoniac gazeux. Comme visible aux figures 4 et 5, le mélangeur siphon inverse est destiné à être utilisé dans les systèmes d'échappement automobiles en amont d'un catalyseur de réduction sélective (SCR) pour faciliter le mélange entre les flux.

Dans la figure 4 qui représente une première réalisation d'un circuit d'échappement de gaz pour un moteur thermique (5), le dispositif (10) selon le deuxième mode de réalisation est intégré dans un tube (51) qui relie le catalyseur de réduction sélective (SCR ou SCRF) à un catalyseur d'oxydation diesel (DOC) placé avant le catalyseur de réduction sélective (SCR).
On peut quantifier par simulation les valeurs de la chute de pression ou de charge sur le mélangeur et la distribution d'ammoniac sur une section transversale du flexible. Cette section transversale étant prise à moins de 100mm de la sortie du dispositif pour le mélange. Ces valeurs peuvent être comparées à des valeurs expérimentales. L'homogénéité du mélange de gaz d'échappement d'ammoniac est quantifiée à l'aide d'un indice d'uniformité (UI) tel que défini ci-dessous :

$$UI = 1 - \frac{1}{2} \frac{\sum_{i=1}^{n} \left( A_i \sqrt{\left( y_{NH_3,\, i} - \overline{y_{NH_3}} \right)^2} \right)}{A \cdot \overline{y_{NH_3}}}$$

$$\overline{y_{NH_3}} = \frac{\sum_{i=1}^{n} A_i \cdot y_{NH_3,\, i}}{A}$$

Par rapport à un système d'échappement sans mélangeur ou un simple mélangeur à lames, le mélangeur à siphon a amélioré l'UI de -1,382 à 0,82 et de 0,544 à 0,82 respectivement.

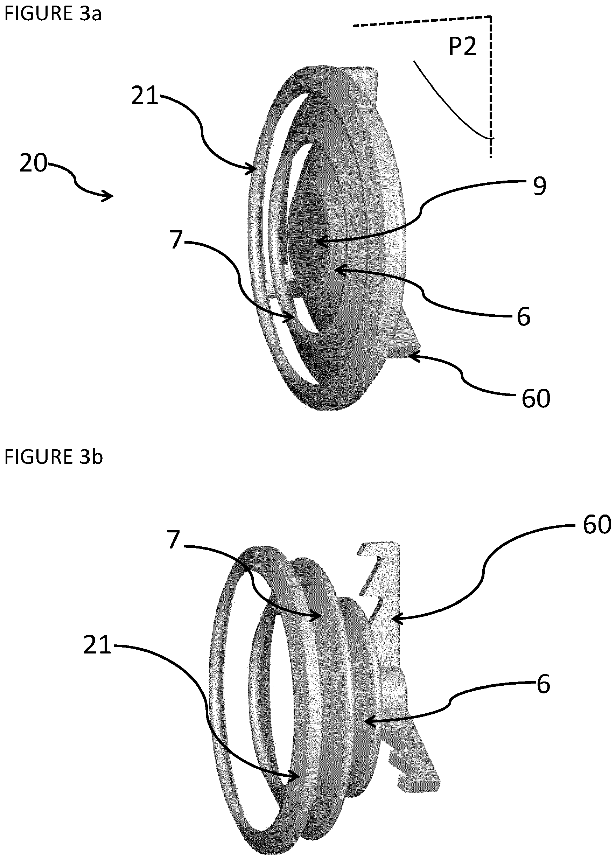

Enfin, les figures 3a, 3b et 3c représentent un troisième mode de réalisation d'un dispositif (20) pour le mélange d'un flux principal (2) avec un flux secondaire (3). La figure 3a est une vue en perspective du dispositif (20) qui est composé d'un disque central (6) plein et d'un anneau périphérique (7) incurvé. Le dispositif (20) comprend en outre un second anneau périphérique (21) courbé de rayon extérieur R3 supérieur au rayon extérieur R2 du premier anneau périphérique (7). La figure 3b est une vue en perspective éclatée du dispositif (20) de la figure 3a. Le dispositif (20) comprend une pièce de maintien (60) qui sert à fixer le disque central (6), l'anneau périphérique (7) et l'anneau périphérique (21) de rayon extérieur R3 ensemble.

La figure 3c est une vue en coupe dans le plan P2 du dispositif (20) de la figure 3a. Le disque central (6) est un disque circulaire de rayon R1. L'anneau périphérique (7) est également circulaire et il est comprend un rayon extérieur R2. Dans le cadre de l'invention le rayon R2 est supérieur au rayon R1 et le rayon extérieur R3 est supérieur au rayon extérieur R2 du premier anneau périphérique (7).

Comme visible sur les figures 3a à 3c, le disque central (6), et les anneaux périphériques (7, 21) sont centrés et se chevauchent au niveau des parties courbées de manière à former deux espaces (8) pour le passage des flux (2, 3). Les espaces ont une hauteur qui dépend du rayon de courbure des différents éléments et ils peuvent être compris entre 5 et 25 mm. Le disque central (6) a une forme arrondie et il comprend au centre une partie plane (9). Dans d'autres variantes de réalisation, le disque central (6) peut avoir une forme plane, pyramidale sans que cela change l'effet technique du dispositif (20) pour le mélange.

Dans ce troisième mode de réalisation, le dispositif (20) est dans une configuration de type diffuseur. Le dispositif (20) est prévu pour être positionné dans un tube d'échappement (4) de telle manière que le disque central (6) est positionné en aval des anneaux périphériques (7, 21) lorsque que l'on considère le sens de circulation des flux (2, 3). Un dispositif d'injection (50) permet d'injecter le flux auxiliaire (3) dans le flux principal (2) qui circule dans la tuyère de colonne d'échappement (4). Le dispositif d'injection (50) est positionné avant le dispositif (20) pour le mélange. Le dispositif (20) est maintenu dans la colonne d'échappement grâce à la pièce de maintien (60).

De par cette conception, le diffuseur a une surface d'entrée plus grande ou égale à la zone de sortie, limitant ainsi l'écoulement sur la première surface tout en libérant ensuite les gaz sur une plus grande surface de sortie.

D'une manière générale, le flux principal (2) peut être un flux gazeux ou liquide comme des gaz d'échappement du moteur thermique (5) et le flux auxiliaire (3) peut être un flux gazeux ou liquide comme de l'ammoniac gazeux.

Comme visible aux figures 4 et 5, le diffuseur est destiné à être utilisé dans les systèmes d'échappement automobiles en amont d'un catalyseur de réduction sélective (SCR) pour faciliter le mélange entre les flux.

Dans la figure 4 qui représente une première réalisation d'un circuit d'échappement de gaz pour un moteur thermique (5), le dispositif (20) selon le troisième mode de réalisation est intégré dans un tube (51) qui relie le catalyseur de réduction sélective (SCR ou SCRF) à un catalyseur d'oxydation diesel (DOC) placé avant le catalyseur de réduction sélective (SCR).

On peut quantifier par simulation les valeurs de la chute de pression sur le mélangeur et la distribution d'ammoniac sur une section transversale du flexible. Cette section transversale étant située à moins de 100mm de la sortie du diffuseur. Ces valeurs peuvent être comparées à des valeurs expérimentales. L'homogénéité du mélange de gaz d'échappement d'ammoniac est quantifiée à l'aide d'un indice d'uniformité (UI) tel que défini ci-dessous :

$$UI = 1 - \frac{1}{2} \frac{\sum_{i=1}^{n} \left( A_i \sqrt{\left( y_{NH_3,i} - \overline{y_{NH_3}} \right)^2} \right)}{A \cdot \overline{y_{NH_3}}}$$

$$\overline{y_{NH_3}} = \frac{\sum_{i=1}^{n} A_i \cdot y_{NH_3,i}}{A}$$

Par rapport à un système d'échappement sans mélangeur ou un simple mélangeur à lames, le mélangeur à siphon a amélioré l'UI de -1,382 à 0,89 et de 0,544 à 0,89 respectivement.

Comme il va de soi, l'invention ne se limite pas aux réalisations décrites ci-dessus à titre d'exemple, elle embrasse au contraire toutes les variantes de réalisation.

## Revendications

1. Circuit d'échappement de gaz d'un moteur thermique (5) comprenant un catalyseur de réduction sélective (SCR) et un catalyseur d'oxydation diesel (DOC) positionné en amont du catalyseur de réduction sélective (SCR), ledit circuit comprenant un dispositif (1, 10, 20) pour le mélange d'au moins un flux principal (2) avec au moins un flux auxiliaire (3) dans un tube d'échappement (4) de gaz d'un moteur thermique (5), ledit dispositif est positionné dans un tube (51) entre le catalyseur de réduction sélective (SCR) et le catalyseur d'oxydation diesel (DOC), **caractérisé en ce que** ledit dispositif est composé d'un disque central (6) plein de rayon R1 et d'un anneau périphérique (7) pourvu d'une partie évidée au centre de rayon extérieur R2 supérieur au rayon R1, le disque central (6) et l'anneau périphérique (7) sont centrés l'un par rapport à l'autre et distants l'un de l'autre d'une longueur D, l'anneau périphérique (7) est directement en contact avec le tube d'échappement (4) et ledit dispositif comprend, entre le disque central (6) et l'anneau périphérique (7), un espace (8) pour le passage des flux (2, 3), ledit dispositif (1, 10, 20) étant prévu pour être positionné dans le tube d'échappement (4).

2. Circuit selon la revendication 1 dans lequel le disque central (6) a une forme arrondie et la partie périphérique du disque central (6) est dirigée vers l'anneau périphérique (7).

3. Circuit selon l'une des revendications précédentes, dans lequel le disque central (6) comprend une partie plane (9) au centre.

4. Circuit selon l'une des revendications précédentes, dans lequel l'anneau périphérique (7) est positionné en amont du disque central (6) dans le sens de circulation des flux.

5. Circuit selon la revendication 1 **caractérisé en ce que** le disque central (6) a une forme arrondie et la partie périphérique du disque central (6) est dirigée à l'opposé de l'anneau périphérique (7).

6. Circuit selon la revendication 5 **caractérisé en ce que** l'anneau périphérique (7) a une forme arrondie et la partie périphérique de l'anneau périphérique (7) chevauche en partie le disque central (6).

7.  Circuit selon la revendication 5 ou 6 **caractérisé en ce que** l'anneau périphérique (7) est positionné en aval du disque central (6) dans le sens de circulation des flux.

8.  Circuit selon l'une des revendications précédentes **caractérisé en ce que** le dispositif comprend un second anneau périphérique (21) de rayon extérieur R3 supérieur au rayon extérieur R2 du premier anneau périphérique (7).

9.  Circuit selon la revendication précédente **caractérisé en ce que** le second anneau périphérique (21) est positionné en amont de l'anneau périphérique (7) dans le sens de circulation des flux.

10. Circuit selon l'une des revendications précédentes **caractérisé en ce que** le flux principal (2) peut être un flux gazeux.

11. Circuit selon l'une des revendications précédentes **caractérisé en ce que** le flux auxiliaire (3) peut être un flux gazeux ou liquide.

12. Circuit selon l'une des revendications précédentes **caractérisée en ce qu'**il comprend un dispositif d'injection (50) d'au moins un flux auxiliaire (3) dans au moins un flux principal (2), ledit dispositif d'injection (50) est positionné en amont du catalyseur de réduction sélective (SCR) et du dispositif (1, 10, 20) de mélange.


**Patentansprüche**

1.  Abgasanlage eines Verbrennungsmotors (5), welche einen selektiven Reduktionskatalysator (SCR) und einen stromaufwärts des selektiven Reduktionskatalysators (SCR) positionierten Dieseloxidationskatalysator (DOC) umfasst, wobei die Anlage eine Vorrichtung (1, 10, 20) zur Mischung wenigstens eines Hauptstroms (2) mit wenigstens einem Hilfsstrom (3) in einem Abgasrohr (4) eines Verbrennungsmotors (5) umfasst, wobei die Vorrichtung in einem Rohr (51) zwischen dem selektiven Reduktionskatalysator (SCR) und dem Dieseloxidationskatalysator (DOC) positioniert ist, **dadurch gekennzeichnet, dass** die Vorrichtung aus einer massiven zentralen Scheibe (6) mit einem Radius R1 und einem mit einem ausgesparten Teil in der Mitte versehenen peripheren Ring (7) mit einem Außenradius R2, der größer als der Radius R1 ist, besteht, wobei die zentrale Scheibe (6) und der periphere Ring (7) relativ zueinander zentriert und um eine Länge D voneinander beabstandet sind, wobei sich der periphere Ring (7) direkt mit dem Abgasrohr (4) in Kontakt befindet und die Vorrichtung zwischen der zentralen Scheibe (6) und dem peripheren Ring (7) einen Zwischenraum (8) für den Durchfluss der Ströme (2, 3) umfasst, wobei die Vorrichtung (1, 10, 20) dafür vorgesehen ist, in dem Abgasrohr (4) positioniert zu werden.

2.  Anlage nach Anspruch 1, wobei die zentrale Scheibe (6) eine abgerundete Form aufweist und der periphere Teil der zentralen Scheibe (6) zu dem peripheren Ring (7) hin gerichtet ist.

3.  Anlage nach einem der vorhergehenden Ansprüche, wobei die zentrale Scheibe (6) einen ebenen Teil (9) in der Mitte umfasst.

4.  Anlage nach einem der vorhergehenden Ansprüche, wobei der periphere Ring (7), auf die Strömungsrichtung der Ströme bezogen, stromaufwärts der zentralen Scheibe (6) positioniert ist.

5.  Anlage nach Anspruch 1, **dadurch gekennzeichnet, dass** die zentrale Scheibe (6) eine abgerundete Form aufweist und der periphere Teil der zentralen Scheibe (6) von dem peripheren Ring (7) weg gerichtet ist.

6.  Anlage nach Anspruch 5, **dadurch gekennzeichnet, dass** der periphere Ring (7) eine abgerundete Form aufweist und der periphere Teil des peripheren Ringes (7) die zentrale Scheibe (6) teilweise überlappt.

7.  Anlage nach Anspruch 5 oder 6, **dadurch gekennzeichnet, dass** der periphere Ring (7), auf die Strömungsrichtung der Ströme bezogen, stromabwärts der zentralen Scheibe (6) positioniert ist.

8.  Anlage nach einem der vorhergehenden Ansprüche, **dadurch gekennzeichnet, dass** die Vorrichtung einen zweiten peripheren Ring (21) mit einem Außenradius R3, der größer als der Außenradius R2 des ersten peripheren Ringes (7) ist, umfasst.

9.  Anlage nach dem vorhergehenden Anspruch, **dadurch gekennzeichnet, dass** der zweite periphere Ring (21), auf die Strömungsrichtung der Ströme bezogen, stromaufwärts des peripheren Ringes (7) positioniert ist.

10. Anlage nach einem der vorhergehenden Ansprüche, **dadurch gekennzeichnet, dass** der Hauptstrom (2) ein gasförmiger Strom sein kann.

11. Anlage nach einem der vorhergehenden Ansprüche, **dadurch gekennzeichnet, dass** der Hilfsstrom (3) ein gasförmiger oder flüssiger Strom sein kann.

12. Anlage nach einem der vorhergehenden Ansprüche, **dadurch gekennzeichnet, dass** sie eine Vorrichtung (50) zur Einspritzung wenigstens eines Hilfsstroms (3) in wenigstens einen Hauptstrom (2) umfasst, wobei die Einspritzvorrichtung (50) stromaufwärts des selektiven Reduktionskatalysators (SCR) und der Vorrichtung (1, 10, 20) zur Mischung positioniert ist.

**Claims**

1. Gas exhaust circuit for a combustion engine (5) comprising a selective reduction catalyst (SCR) and a diesel oxidation catalyst (DOC) positioned upstream of the selective reduction catalyst (SCR), said circuit comprising a device (1, 10, 20) for mixing at least one main flow (2) with at least one auxiliary flow (3) in a gas exhaust tube (4) of a combustion engine (5), said device being positioned in a tube (51) between the selective reduction catalyst (SCR) and the diesel oxidation catalyst (DOC), **characterized in that** said device is composed of a solid central disc (6) of radius R1 and of a peripheral ring (7) provided with an apertured part at the centre of outer radius R2 greater than the radius R1, the central disc (6) and the peripheral ring (7) being centred with respect to one another and apart from one another by a length D, the peripheral ring (7) being directly in contact with the exhaust tube (4), and said device comprising, between the central disc (6) and the peripheral ring (7), a space (8) for the passage of the flows (2, 3), said device (1, 10, 20) being intended to be positioned in the exhaust tube (4).

2. Circuit according to Claim 1, wherein the central disc (6) has a rounded shape, and the peripheral part of the central disc (6) is directed towards the peripheral ring (7).

3. Circuit according to either of the preceding claims, wherein the central disc (6) comprises a flat part (9) at the centre.

4. Circuit according to one of the preceding claims, wherein the peripheral ring (7) is positioned upstream of the central disc (6) in the direction of circulation of the flows.

5. Circuit according to Claim 1, **characterized in that** the central disc (6) has a rounded shape, and the peripheral part of the central disc (6) is directed away from the peripheral ring (7).

6. Circuit according to Claim 5, **characterized in that** the peripheral ring (7) has a rounded shape, and the peripheral part of the peripheral ring (7) partly straddles the central disc (6).

7. Circuit according to Claim 5 or 6, **characterized in that** the peripheral ring (7) is positioned downstream of the central disc (6) in the direction of circulation of the flows.

8. Circuit according to one of the preceding claims, **characterized in that** the device comprises a second peripheral ring (21) of outer radius R3 greater than the outer radius (R2) of the first peripheral ring (7).

9. Circuit according to the preceding claim, **characterized in that** the second peripheral ring (21) is positioned upstream of the peripheral ring (7) in the direction of circulation of the flows.

10. Circuit according to one of the preceding claims, **characterized in that** the main flow (2) can be a gaseous flow.

11. Circuit according to one of the preceding claims, **characterized in that** the auxiliary flow (3) can be a gaseous or liquid flow.

12. Circuit according to one of the preceding claims, **characterized in that** it comprises an injection device (50) for injecting at least one auxiliary flow (3) into at least one main flow (2), said injection device (50) being positioned upstream of the selective reduction catalyst (SCR) and of the mixing device (1, 10, 20).

FIGURE 1a

FIGURE 1b

FIGURE 2a

FIGURE 2b

FIGURE 3a

FIGURE 3b

FIGURE 3c

FIGURE 4

FIGURE 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011086259 A
- US 2009266064 A
- DE 10060808 A1
- WO 2007110575 A1
- EP 2388451 A1
- US 2010139258 A1
- US 2009229254 A1